# EUROPEAN PATENT APPLICATION

(11) **EP 2 439 335 A2**
(43) Date of publication of application: **11.04.2012**
(21) Application number: 11176683.8
(22) Date of filing: 05.08.2011
(51) Int. Cl.: E01D 15/24

(54) **Finger assembly for the embarkment and disembarkment of passengers**

(30) Priority: 19.08.2010 ES 201031267
(71) Applicant: Team, Ports & Maritime, S.L, 08029 Barcelona (ES)
(72) Inventor: Bonvila Bonet, Pere, 08029 Barcelona (ES)
(74) Representative: Isern-Jara, Nuria

(57) **Abstract**

A finger assembly (1) for the embarkment and disembarkment of passengers which permits the access of passengers from a port terminal, comprising a first telescopic part (2) supported by a vertical post (3) anchored to the ground, having said telescopic part extendible tunnels (4, 5, 6), decreasing the cross section of each of said tunnels (4, 5, 6) progressively one after the other in a direction such that the tunnel with the biggest cross section (4) is supported directly by the vertical post (3) and is coupled to the terminal, while the tunnel with the smallest cross section (6) is located at the opposed end of the first telescopic part and a second telescopic part (10) which may be coupled to the ship, being formed by two extendible tunnels and supported by a metallic support structure (13), being said second part coupled to the first telescopic part (2) by means of a rotating cab which does not have driving means, having means for the elevation and descent to follow the rolling movement of the ship.

## Description

### OBJECT OF THE INVENTION

The present patent application is related to a finger assembly for the embarkment and disembarkment of passengers in a sea terminal or station, incorporating important innovations and advantages in respect to the gangplanks which are known at present, having multiple coupled extendible tunnels and hinged portions to permit a rotation movement of the different parts forming the finger assembly of the invention, which features are defined in the appended claims.

### FIELD OF THE INVENTION

The field in which the invention will be applied is the industry addressed to the construction of port structures and equipments, especially those aimed to facilitate the docking of passenger ships and the embarking and disembarking of the passengers.

### PRIOR ART

In the prior art, installations and equipments for the disembarking of passengers from a passenger ship after the docking of the ship are well known.

However, the installations known at present, due to its construction, are not as practical as they should be and, for instance, have a limitation as to the length corresponding to the area of passage of the passengers or personnel between the building at the port reception area and the docked ship, as well as to the manoeuvrability of the installation, all of it increasing the degree of complexity of the operations needed for its set out.

Further, the applicant do not known of the existence of a finger assembly for the operations of embarkment and disembarkment of passengers having the technical and construction features which will be described in the following.

### DESCRIPTION

The invention has been developed with the aim to provide a finger assembly for embarking and disembarking passengers solving the disadvantages priorly existing in an effective, practical, and safe form, bringing in addition other advantages that will be evident from the following description.

Thus, the object of the present invention consists in providing a finger assembly for embarking and disembarking passengers which makes possible the access of passengers from a terminal building or port installation up to the interior of the ship and viceversa.

Particularly, the invention is characterised by the fact that it comprises: a first telescopic part supported by means of a vertical post anchored to the ground, said telescopic part having at least three extendible tunnels, which tunnels have a cross section which decreases from one to the other tunnels in a row, in a direction such that the tunnel with the biggest cross section will be directly supported by the vertical post and coupled to the port terminal while the tunnel with an smaller cross section will be placed at the end opposed to the first telescopic part, being said first part capable of rotating in respect to the vertical axis of the vertical post; and a second telescopic part having capacity for its coupling by one of its ends to a ship, being formed by means of two tunnels extendible one in respect to the other, which are supported by a metallic support structure which may be displaced on the horizontal plane and therefore has the role of making possible all the translation movements of the finger assembly for the embarkment of passengers and to hold both extendible tunnels.

Said second telescopic part is coupled to the first telescopic part by means of a rotating cab which does not have driving means and which is placed at one end of the second telescopic part rotatably around the vertical axis of the same, elevation and descent means having been provided to elevate or descend the second telescopic part, so that it may follow the rolling movement of the ship in which said second part is coupled.

These features bring a higher freedom of movements to the finger assembly given the existence of rotating movements between both parts and also in respect to the end points corresponding respectively to the ship and to the embarkment area, as well as the telescopic capacity of the various tunnels and the capacity of movement of the metallic support structure, which possibilitate practically any type of movements in the three directions in space.

Another not less important and advantageous aspect is determined by the progressively decreasing cross section of the tunnels of the first telescopic part, which facilitates a better balanced distribution of the loads. In this way, when getting away from the support point (the vertical post), the cross section of the tunnel decreases and therefore also its weight, so that the load on the support of the second telescopic part is less than in the rotating point associated to the port building, in this form decreasing the load of the movable structure which customarily is substantially loaded.

Preferably, the above mentioned vertical post has two tubular portions attached together by securement means. In this way, the height of the first telescopic part may be changed in respect to the ground level by the simple removal of the lower portion of the vertical post.

According to another aspect of the invention, a second cab is provided in the assembly finger of the invention, coupled with capacity of rotation by its lower part on the upper part of the vertical post and by one of its sides to the tunnel with the biggest cross section, so that said second cab is capable of rotation around the vertical axis of the vertical post, transmitting said rotating movement to the first telescopic part.

According to another aspect of the invention, the elevation and descent means comprise a piston and cylinder hydraulic mechanism fixed to the metallic support structure, which mechanism is coupled to the tunnel attached to the rotating cab.

Advantageously, the above mentioned hydraulic mechanism is axially displaceable in the vertical direction by means of vertical guides supported on the metallic support structure. Specially, in a particular embodiment, it may comprise two vertical guides opposed to each other and separated by a gap which approximately corresponds to the width of the tunnels of the second telescopic part.

In this way, the new finger assembly for the embarkment and disembarkment of passengers in ships provides an innovative arrangement with structural and construction features which were not known so far for this purpose. These reasons, together with the practical utility of the finger assembly are sufficient ground to obtain the privilege of exclusivity being applied for.

Other features and advantages of the finger assembly of the present invention will be evident from the following description of a preferred, although not exclusive embodiment, which has been illustrated as a non limitative example in the following drawings, in which:

### BRIEF DESCRIPTION OF THE DRAWINGS

Figure 1, is a perspective view of the finger assembly, according to the present invention with its various tunnel extended;
Figure 2, is a perspective view of a detail corresponding to the first telescopic part of the finger assembly of the invention;
Figure 3, is a perspective view in detail corresponding to the second telescopic part of the finger assembly of the invention in which one of the extendible tunnels has been omitted;
Figure 4, is a perspective view in detail from the top of the cab mounted on the first telescopic part;
Figure 5, is a perspective view in detail seen from the bottom of the cab mounted on the first telescopic part;

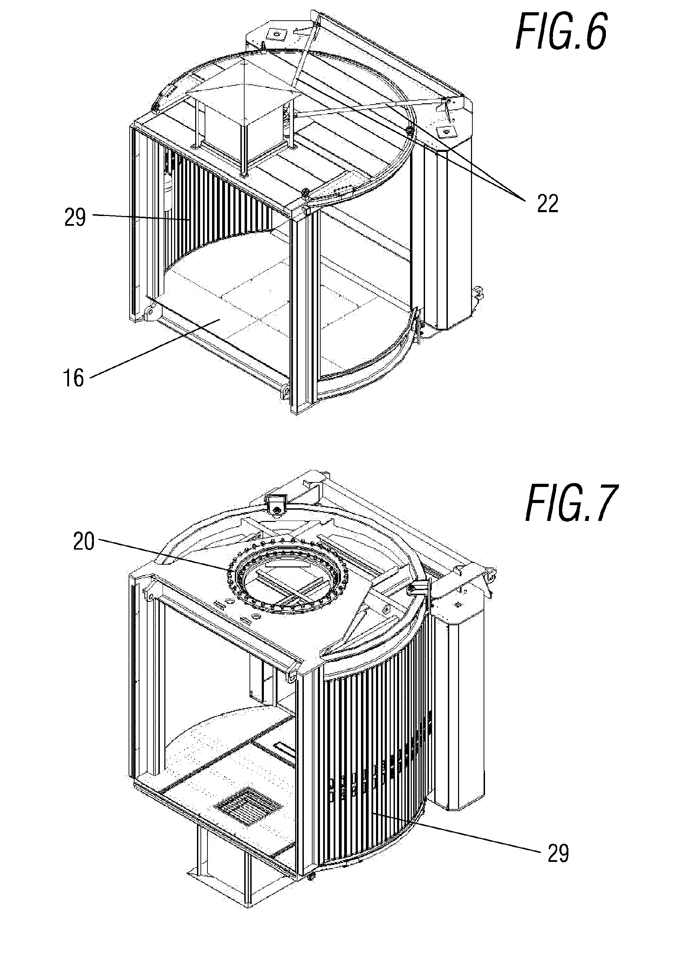

Figure 6, is a perspective view in detail from the top of the cab mounted on the second telescopic part;
Figure 7, is a perspective view in detail from the bottom part of the cab mounted in the second telescopic part;

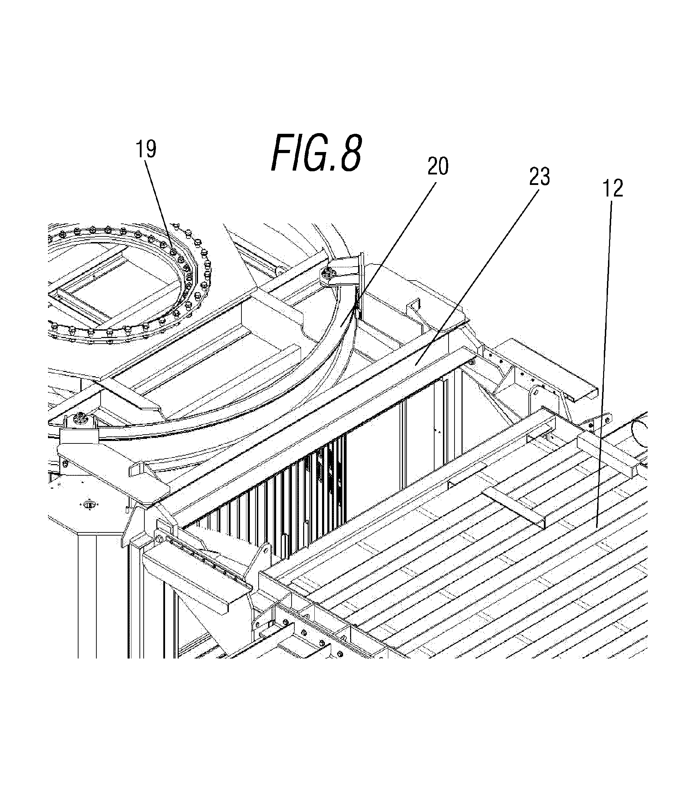

Figure 8, is a perspective view in detail of the union area between the cab and the tunnel of the second telescopic part;
Figure 9, is a perspective view of the vertical posts associated to the first telescopic part of the finger assembly;
Figure 10, is a perspective view of the metallic support structure associated to the second telescopic part of the finger assembly;
Figure 11, is a perspective view of one tunnel of the second telescopic part;
Figure 12, is a perspective view of the other tunnel of the second telescopic part coupled to the second tunnel of the second telescopic part and
Figure 13, is a perspective view of one of the tunnels of the first telescopic part.

### DESCRIPTION OF A PREFERRED EMBODIMENT

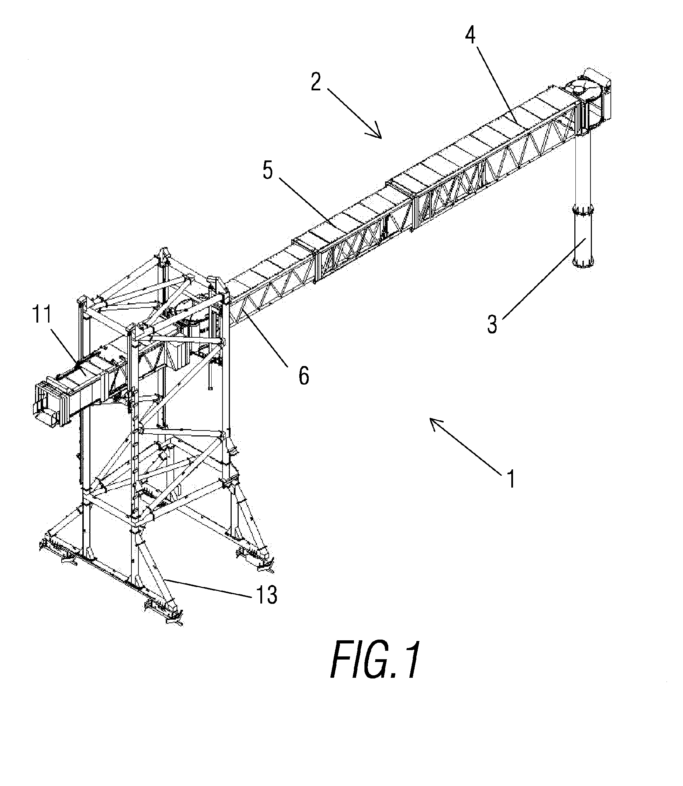

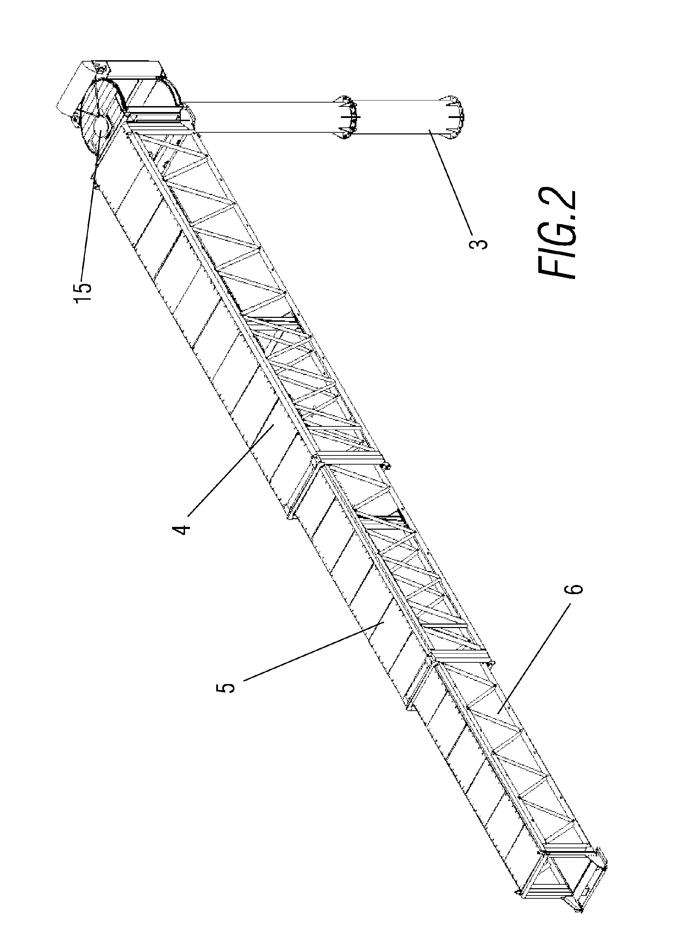

In the accompanying drawings, a finger assembly according to the invention for the embarkment and disembarkment of passengers has been illustrated. It is of a modular type generally designated by the reference numeral 1 in figure 1, comprising a first telescopic part 2 (see figure 2) supported by means of a vertical post 3 anchored to the ground, having a height of 15 metres, said telescopic part having at least three extendible tunnels 4, 5, 6 arranged lengthwise. The cross section (rectangular) of each of the tunnels decreases successively in a direction such that the tunnel 4 with a biggest cross section is supported directly by the vertical post 3 while the tunnel with a smaller cross section is placed at the opposed end of the first telescopic part 2, being said first part 2 capable of rotating around the vertical axis of the vertical post 3.

The biggest tunnel 4 has a width of 2.87 m; the intermediate tunnel 5 has a width of 2.48 m and the tunnel 6 with an smaller section has a width of 2.09 m, being the retracted length of 20 metres approximately, while in the extended position the total length defined by the three tunnel 4, 5, 6 is of 43 metres approximately.

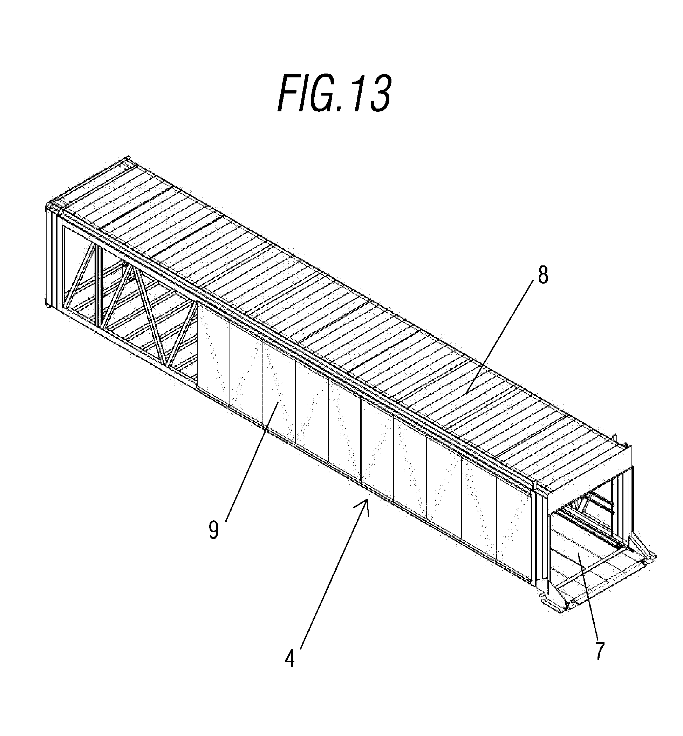

Each one of the tunnels 4, 5, 6, as may be seen in tunnel 4 shown in figure 13, has a substantially parallelepipedic form being constituted by a base 7, a roof 8 and two side walls 9 anchored altogether by means of metal bars and having said tunnels the capacity to move one in respect to the other by guiding means such as rollers running on guides, situated in the upper and lower parts of both tunnels of smaller cross section; however these are commonly used guiding means for which reason they will not be described in more detail.

Furthermore, a second telescopic part 10 is provided which may be coupled by one of its ends to a ship (not shown), said telescopic part being formed by two tunnels 11, 12 which are extendible one in respect to the other, being supported by a metallic support structure 13 which is approximately 25 metres high and which may be displaced on a horizontal plane, said second part 10 being coupled to the first telescopic part 2 by means of a rotating cab 14 which does not have any driving means.

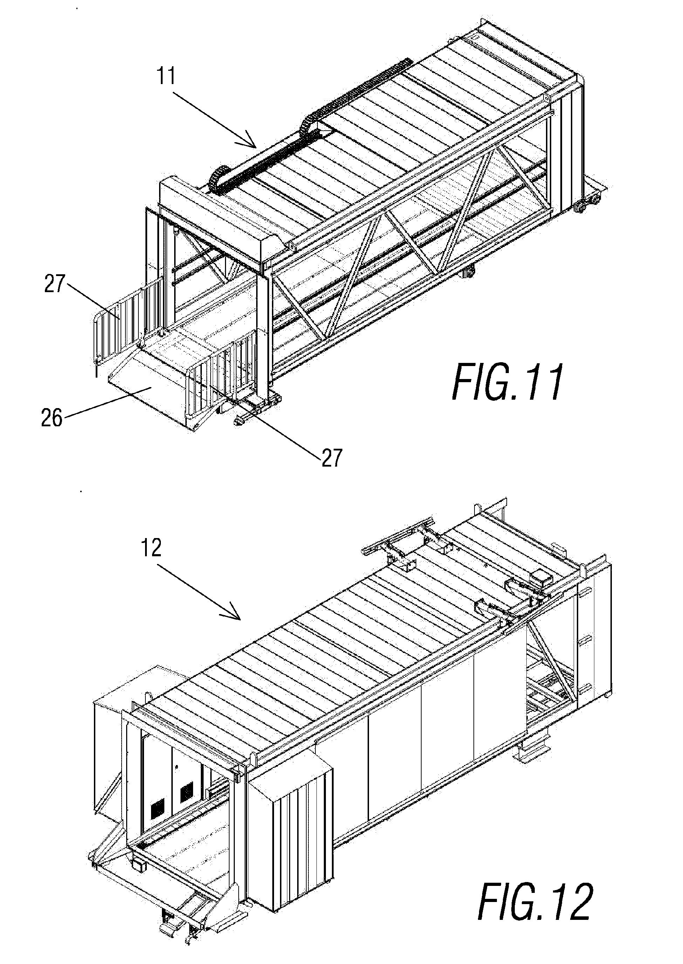

As shown in figures 11, 12 the tunnels 11, 12 are also formed by a substantially parallelepipedic body with rectangular cross section, while tunnel 11, also called docking passage, includes at the end opposed to the ship an access ramp 26 with two side hand rails 27.

Said rotating cab 14 is placed at one end of the second telescopic part rotaty around its vertical axis; elevation and descent means having been provided to raise or lower the second telescopic part 10 such that it permits to adapt to the rolling movement carried out by the ship when it is docked in the port, in which the second part 10 is coupled.

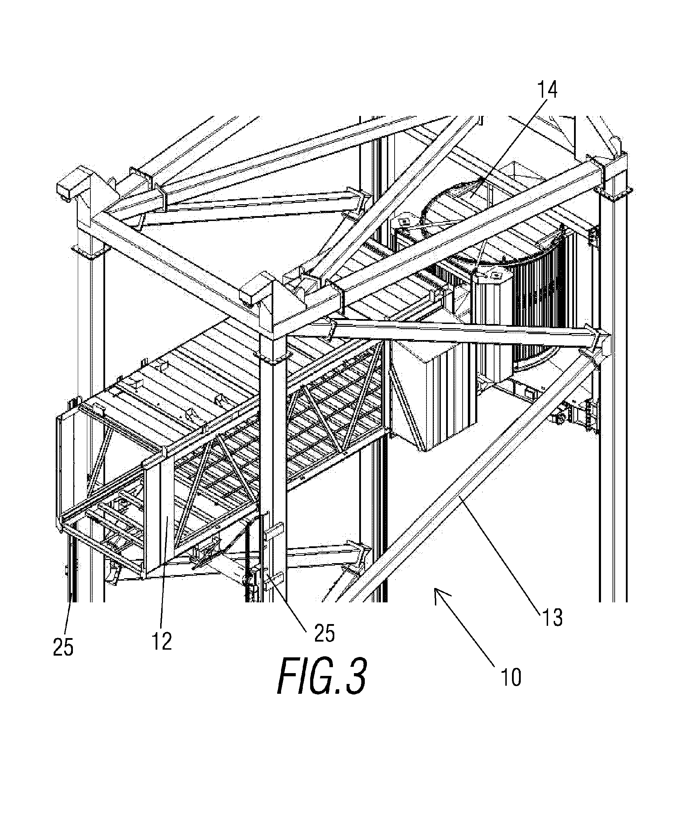

This hydraulic mechanism may be axially displaced in the vertical direction by means of vertical guides 25 opposed to each other (to be seen more clearly in figure 3) and supported on the metallic support structure 13, which permits to regulate the position of the hydraulic mechanism in a simple and relatively fast manner.

To carry out the rotation operation of the first part 2 in respect to the vertical axis of the vertical post 3 a second cab 15 is provided, coupled with capacity to rotate by its lower part on the top of the vertical post 3 and coupled by one of its lateral sides to the tunnel with the biggest cross section, so that said second cab 15 has the capacity to carry out rolling movements in respect to the vertical axis of the vertical post 3, transmitting this rotating movement to the first telescopic part 2.

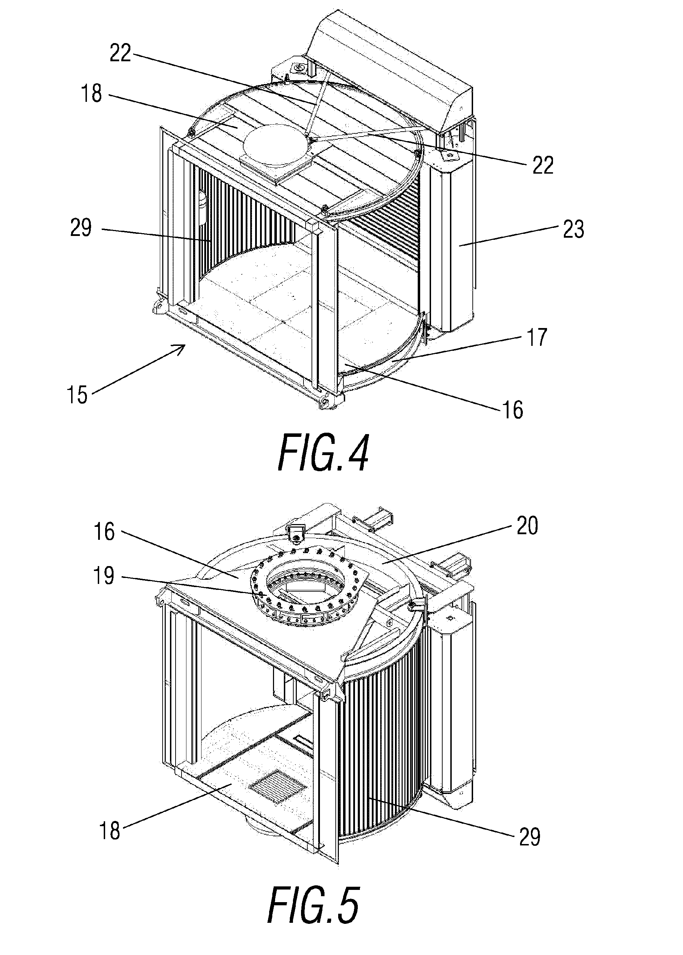

As shown in figures 4 and 5, this second cab 15 has a substantially cylindrical body with a lower base 16 acting as ground surface, a side wall 17 having access openings (four of them in this embodiment, so that the unused openings are closed by covers) and a top part 18.

The lower base 16 has a coupling portion 19 which permits the coupling of the vertical post 3 which has a cylindrical protruding length which may engage the upper part of said vertical post 3 and a guiding rail 20 located in the vicinity of the periphery of the lower base 16 with an arch form on which are capable of sliding two guiding elements anchored at opposed ends of the tunnel which has the biggest cross section, having said guiding elements respective wheels anchored by means of screws and similar elements on metal plates 21 anchored in its turns to the supports 24.

The upper part of the second cab 15 shown in figure 4, has a rotating shaft from which a couple of struts 22 protrude, arranged in V form, anchored by its ends to the upper part of the tunnel which has the biggest cross section, particularly on a frame 23 located at the end of the tunnel, the rotating movement of said axis being synchronised with the sliding movement of the guiding means arranged in the tunnel 4 with the biggest cross section.

It has to be remarked that the cab 14 included in the second telescopic part has the same elements for guiding and displacement than the second cab 15, for which reason said first cab 14 will not be described in further detail, having been used the same numeral references for the common parts between both rotating cabs 14 and 15. Additionally, some shutter means 29 have been provided engaging on the access openings of the side walls of both rotating cabs.

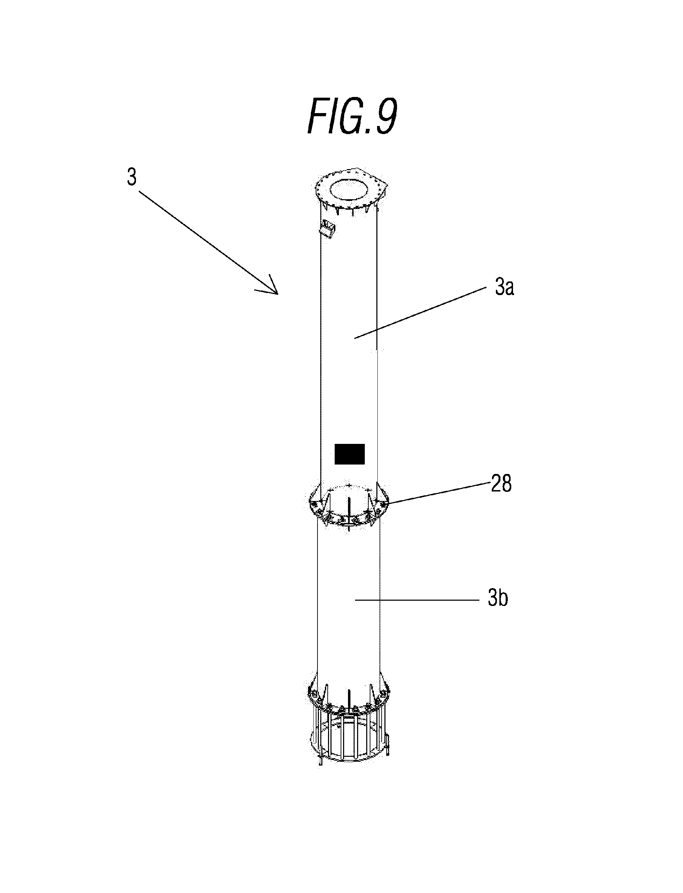

Figure 9 shows that vertical post 3 has two tubular portions, an upper portion 3a and a lower portion 3b, connected to each other by securing means such as screws and similar elements 28.

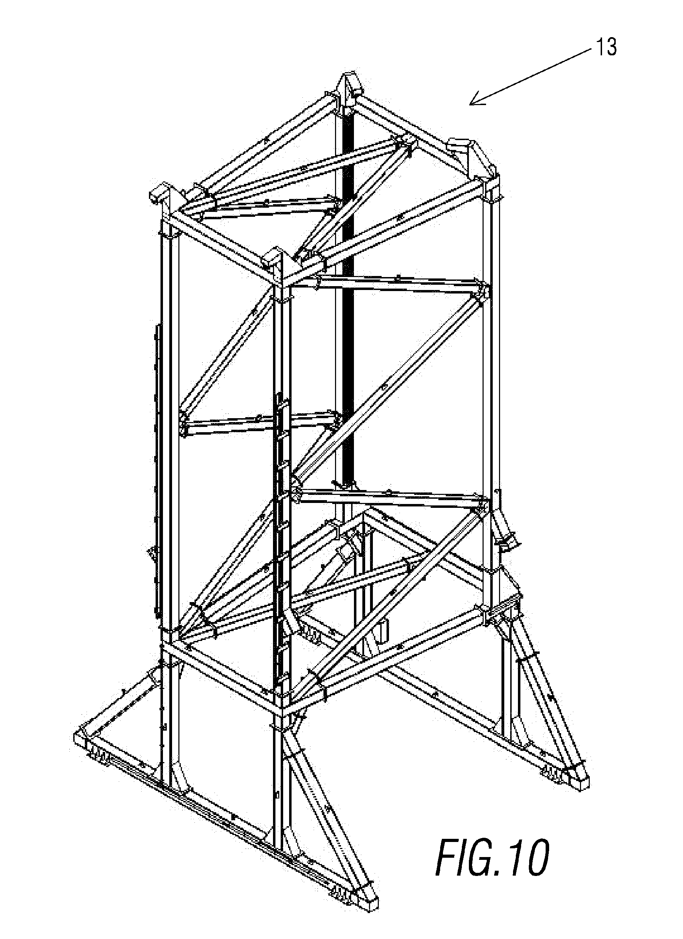

As may be seen in more detail in figure 10, the movable metallic support structure 13 comprises multiple metal beams arranged in a form similar to a gantry, in which lower part rollers are arranged which permit its displacement along guiding rails. The second telescopic part passes through the above described structure.

As is to be understood from the foregoing, the points for the rotation of the finger assembly 1 of the invention which correspond to the rotating cabs 14, 15, carry out the rotation without the need to use driving means.

The details, shape, size and the rest of accessory elements as well as the materials employed in the manufacture of the finger assembly of the invention may be conveniently changed by other technically equivalent not departing from the essentiality of the invention, nor from the scope of the same as defined by the appended claims.

## Claims

1. Finger assembly (1) for the embarkment and disembarkment of passengers, of the type aimed at easying up the access of the passengers from a terminal or dock installation to the interior of a ship or viceversa, **characterised in that** it comprises:
a first telescopic part (2) supported by means of a vertical post (3) fixed to the ground, said telescopic part having at least three extendible tunnels (4, 5, 6) each of them having a substantially parallelepipedic form, the cross section of each of the tunnels (4, 5, 6) decreasing one after the other in a direction such that the tunnel with the biggest cross section (4) is directly supported by the vertical post (3) and is coupled to the port terminal, while the tunnel with the smallest cross section (6) is located at the end which is opposed to the first telescopic part, said first part being capable to rotate around the vertical axis of the vertical post (3) and
a second telescopic part (10) which may be coupled by one of its ends to a ship, said part being formed by two tunnels which are lengthwise extendible one in respect to the other, which telescopic part is supported by a metallic support structure (13) which may be displaced on an horizontal plane, being said second part coupled to the first telescopic part (2) by means of a rotating cab void of driving means, being such rotating cab located at one end of the second telescopic part rotary around its vertical axis; means for elevation and descent having been provided in order to raise or lower the second telescopic part, so that it may follow the rolling movement of the ship in which said second part is coupled.

2. Finger assembly (1) for the embarkment and disembarkment of passengers, according to claim 1, **characterised in that** the vertical post (3) comprises two, respectively top and bottom, tubular portions (3a, 3b) anchored together by fixing means.

3. Finger assembly (1) for the embarkment and disembarkment of passengers, according to claim 2, **characterised in that** the fixing means comprise screws and similar (28).

4. Finger assembly (1) for the embarkment and disembarkment of passengers, according to claim 1, **characterised in that** the metallic movable support structure (13) comprises a plurality of metallic profiles arranged as a gantry, in which lower part displacement wheels are arranged, the second telescopic part (10) passing through said lower part.

5. Finger assembly (1) for the embarkment and disembarkment of passengers, according to claim 1, **characterised in that** it is provided with a second cab rotatably coupled by its lower part to the top part of the vertical post (3) and coupled at a lateral side to the tunnel with a biggest cross section, such that said second cab (15) is capable of rotating around the vertical axis of the vertical post (3) transmitting the rotating movement to the first telescopic part (2).

6. Finger assembly (1) for the embarkment and disembarkment of passengers, according to claim 5, **characterised in that** the second cab comprises a substantially cylindrical body having a lower base, a lateral wall provided with at least two access openings and a top part, having the lower base a portion for coupling to the vertical post (3) and an arched guiding rail along which the guide elements anchored to the biggest cross section tunnel slide.

7. Finger assembly (1) for the embarkment and disembarkment of passengers, according to claims 5 and 6, **characterised in that** the top part of the second cab (15) is provided with a rotating shaft from which a couple of struts (22) protrude, arranged in V form, anchored by its ends to the top part of the biggest cross section tunnel, the rotating movement of said shaft being synchronised with the sliding movement of the guiding means provided in the biggest cross section tunnel.

8. Finger assembly (1) for the embarkment and disembarkment of passengers, according to claim 1, **characterised in that** the rotating cab associated to the second telescopic part (10) comprises a substantially cylindrical body which has a lower base, a side wall provided with at least two access openings, and a top part, the lower base having a coupling portion to be coupled to a beam of the metallic support structure and an arched guiding rail (20) along which said guiding elements fixed to the biggest cross section tunnel slide.

9. Finger assembly (1) for the embarkment and disembarkment of passengers, according to claim 8, **characterised in that** the top part of the rotating cab has a rotating shaft from which two struts (22) protrude, being arranged in V form, fixed by its ends to the top part of one of the extendible tunnels, being the rotating movement of said shaft synchronised with the sliding movement of the guiding means provided in one of the extendible tunnels.

10. Finger assembly (1) for the embarkment and disembarkment of passengers, according to claim 1, **characterised in that** the elevation and descent means comprise an hydraulic mechanism of the piston and cylinder type, anchored to the metallic support structure (13), being coupled to the tunnel associated to the rotating cab.

11. Finger assembly (1) for the embarkment and disembarkment of passengers, according to claim 10, **characterised in that** the hydraulic mechanism is axially moveable in vertical direction by means of vertical guides located in opposed sides and supported on the metallic support structure (13).
